# EUROPÄISCHE PATENTSCHRIFT

(11) **EP 0 715 085 B1**
(45) Veröffentlichungstag und Bekanntmachung des Hinweises auf die Patenterteilung: **04.02.1998**
(21) Anmeldenummer: 95112964.2
(22) Anmeldetag: 17.08.1995
(51) Int. Cl.: F16B 21/02, F16B 13/08

(54) **Befestigungselement**
Fastening element
Dispositif de fixation

(30) Priorität: 27.10.1994 DE 4438408
(43) Veröffentlichungstag der Anmeldung: 05.06.1996
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- EP-A- 0 524 412
- DE-A- 3 330 279
- DE-U- 9 307 086
- FR-A- 2 000 417
- FR-A- 2 329 885
- FR-A- 2 559 558

## Beschreibung

Die Erfindung betrifft ein Befestigungselement mit einem mit einer Befestigungsbohrung versehenen Teil, vorzugsweise für ein Möbelscharnierteil, mit einem in ein vorgebohrtes Loch einsetzbaren Spreizteil, das aus einander gegenüberliegenden Blechstreifen mit an deren äußeren Seiten angeordneten Zähnen besteht und in dem ein mit einem Kopf versehener Stift, der auf gegenüberliegenden schmaleren Seiten seines Schaftes mit in Umfangsrichtung verlaufenden, schneidenden Stegen versehen ist, durch etwa eine Vierteldrehung verriegelbar ist.

Bei einem aus EP 0 524 412 B1 bekannten Befestigungselement dieser Art besteht das Spreizteil aus einer aus elastischem Material bestehenden Buchse, die im Bereich ihres rohrförmigen Schafts mit gegenüberliegenden längsverlaufenden Schlitzen versehen ist. In die Buchse können an gegenüberliegenden Seiten Metallstreifen eingelegt werden, die eine Spreizung der Dübelbuchse bewirken und in die sich die schneidenartigen Stege des Stiftes einschneiden, so daß der Stift nach einer Vierteldrehung sicher in der Buchse verankert ist. Bei dem bekannten Befestigungselement können mit schneidenartigen Kanten oder herausgebogenen Zungen versehene Bleche auch ineinander gegenüberliegenden Aussparungen der Buchse eingesetzt sein, so daß diese unmittelbar in die Seitenwandung des vorgebohrten Loches eingreifen. Das bekannte Befestigungselement ist verhältnismäßig aufwendig, weil es zusätzlich zu den der Spreizung oder Verklammerung dienenden Blechstreifen eine dübelartige in das vorgebohrte Loch einsetzbare Buchse aufweist, die die Blechstreifen haltert.

Aufgabe der Erfindung ist es daher, ein Befestigungselement der eingangs angegebenen Art zu schaffen, das zu seiner einfachen und sicheren Verankerung in einem vorgebohrten Loch keine in dieses einsetzbare dübelartige Buchse benötigt.

Erfindungsgemäß wird diese Aufgabe dadurch gelöst, daß die Blechstreifen an ihren oberen Enden mit dem zu befestigenden Teil verbunden sind. Das erfindungsgemäße Befestigungselement läßt sich in kostengünstiger Weise herstellen, weil keine als Spreizteil oder Halteelement für die Blechstreifen dienende dem vorgebohrten Loch angepaßte dübelartige Buchse vorgesehen werden muß, sondern die Blechstreifen unmittelbar das Spreizteil bilden, die undrehbar und bleibend mit dem zu befestigenden Teil verbunden sind.

Zweckmäßigerweise sind die Blechstreifen durch einen Haltering mit dem unteren Rand der Befestigungsbohrung verbunden. Die Befestigungsbohrung kann aus einem gebördelten Loch des zu befestigenden Teils bestehen, wobei der Ring zwischen dem Randbereich der Unterseite und dem verstemmten oder vernieteten unteren Rand der Bördelung festgelegt ist. Zum Zweck der Befestigung des Ringes an dem gebördelten Loch wird dieser also über die Bördelung geschoben und anschließend der untere Rand der Bördelung nach außen hin zur Festlegung des Ringes verformt.

Zweckmäßigerweise sind die Seiten des Blechstreifens mit Zähnen versehen und nach außen hin abgewinkelt, so daß sie gleichsam als Zahnleisten in die Wandung des vorgebohrten Loches eingreifen können.

Nach einer bevorzugten Ausführungsform ist vorgesehen, daß die unteren, mit den Zähnen versehenen Bereiche der Blechstreifen über abgekröpfte Abschnitte der Blechstreifen mit dem Haltering verbunden sind.

Die Blechstreifen können im Bereich der Zähne zylinderschalenförmig konvex nach außen gekrümmt sein, um dem Stift bei der Spreizung der Blechstreifen eine bessere Führung zu bieten.

Nach einer bevorzugten Ausführungsform der Erfindung ist vorgesehen, daß die unteren Endbereiche der Blechstreifen auf einander zu nach innen hin umgelegt sind. Diese Umlegung kann in der Weise erfolgen, daß die umgelegten Endbereiche etwa parallel zu den äußeren Teilen der Blechstreifen verlaufen. Durch diese Ausführungsform ist gewährleistet, daß die Blechstreifen den Raum zwischen dem Stift und der Seitenwandung des vorgebohrten Loches in einer Weise ausfüllen, daß durch die Drehung des Stiftes um 90° eine gute und sichere Verankerung der Blechstreifen in dem Loch erfolgt.

Zweckmäßigerweise sind die äußeren Teile der Blechstreifen im Bereich der umgelegten Abschnitte der Blechstreifen mit in Umfangsrichtung verlaufenden Wülsten, zahnartigen Profilen oder Riefen versehen, die sich in die Wandung des vorgebohrten Loches eindrücken oder in diese einschneiden. Die Wülste können durch Prägen gebildet sein.

Die parallel zu den äußeren Teilen umgelegten inneren Teile der Blechstreifen können konvex nach innen hin gekrümmt sein. Diese Ausbildung sichert ein gutes Andrücken der Blechstreifen an die Wandung des vorgebohrten Loches. Um ein einfaches Umlegen der unteren Endbereiche der Blechstreifen zu ermöglichen, können diese in ihrem etwa haarnadelförmig gekrümmten Bereich mit dünneren die beiden Abschnitte der Blechstreifen verbindenden Stegen versehen sein.

Nach einer bevorzugten Ausführungsform ist vorgesehen, daß sich die schmalen Seiten des Stifts zu dessen Ende hin keilförmig verbreitern. Diese Ausgestaltung trägt dem Umstand Rechnung, daß die Blechstreifen ausgehend von dem oberen Haltering Hebel bilden, deren wirksamen Hebelarme sich zu den Enden der Blechstreifen hin verlängern.

Nach einer weiteren bevorzugten Ausführungsform ist vorgesehen, daß der Stift mit einem unteren, dessen breiten Seiten überragenden Rand versehen ist. Mit diesem Rand kann der Stift die unteren Enden der Blechstreifen bzw. die unteren gekrümmten Bereiche der die aufeinander gefalteten Abschnitte der Blechstreifen verbindenden Teile übergreifen, so daß der Stift in seine Montagestellung zwischen die Blechstreifen in der Weise gedrückt werden kann, daß er mit seinen Breitseiten an diesen anliegt und diese mit seinem unteren Rand in der Weise übergreift, daß er unverlierbar in der Montagestellung zwischen den Blechstreifen gehalten ist.

Zweckmäßerweise ist der Stift an seinen schmalen Seiten mit gewindeartigen, schneidenden Stegen versehen. Diese Ausführungsform gewährleistet, daß der Stift während seiner Vierteldrehung in seine blockierende Stellung zwischen den Blechstreifen in das vorgebohrte Loch hineingezogen wird.

Nach einer weiteren bevorzugten Ausführungsform ist vorgesehen, daß der kreisrunde Umfang des Kopfes des Stifts mit einem radialen Fortsatz versehen ist, dessen Seiten Anschläge für Abschnitte der Seitenwandung einer Einziehung des zu befestigenden Teils bilden, in die der Kopf zumindest teilweise versenkbar ist, wobei die Anschläge und die durch die Abschnitte der Seitenwand gebildeten Gegenanschläge eine Drehung des Stifts um etwa 90° zulassen. Durch diese Ausgestaltung ist sichergestellt, daß der Stift nur zwischen seiner für die Montage vorbereiteten Stellung und seiner die Blechstreifen in dem vorgebohrten Loch spreizenden Stellung gedreht werden kann.

Ein Ausführungsbeispiel der Erfindung wird nachstehend anhand der Zeichnung näher erläutert. In dieser zeigt
- Fig. 1: einen Längsschnitt durch eine erste Ausführungsform eines Befestigungselements in seiner ungespreizten Montagestellung
- Fig. 2: eine der Fig. 1 entsprechende Darstellung des Befestigungselements in der montierten Stellung, in der der Stift gegenüber der Darstellung in Fig. 1 um etwa 90° gedreht ist,
- Fig. 3: eine Seitenansicht der das Spreizteil bildenden Blechstreifen,
- Fig. 4: eine Unteransicht der Blechstreifen nach Fig. 3,
- Fig. 5: eine Unteransicht der Blechstreifen nach Fig. 3 in. einer anderen Ausführungsform,
- Fig. 6: eine Ansicht auf die Breitseite des Spreizstifts,
- Fig. 7: einen Schnitt durch die Befestigungsbohrung des zu befestigenden Teils vor der Verklammerung der Bördelung mit dem Haltering der Blechstreifen,
- Fig. 8: einen Längsschnitt durch eine zweite Ausführungsform eines Befestigungselements in der ungespreizten Montagestellung,
- Fig. 9: eine der Fig. 8 entsprechende Darstellung des Befestigungselements in der montierten Stellung, in der der Stift gegenüber der Darstellung in Fig. 8 um etwa 90° gedreht ist,
- Fig. 10: eine Draufsicht auf die Befestigungsbohrung des zu befestigenden Teils,
- Fig. 11: eine Draufsicht auf das zu befestigende Teil mit in die Befestigungsbohrung eingesetztem Spreizstift,
- Fig. 12: eine Unteransicht der durch einen Haltering miteinander verbundenen Blechstreifen und
- Fig. 13: eine Draufsicht auf den Haltering mit Blechstreifen nach Fig. 12.

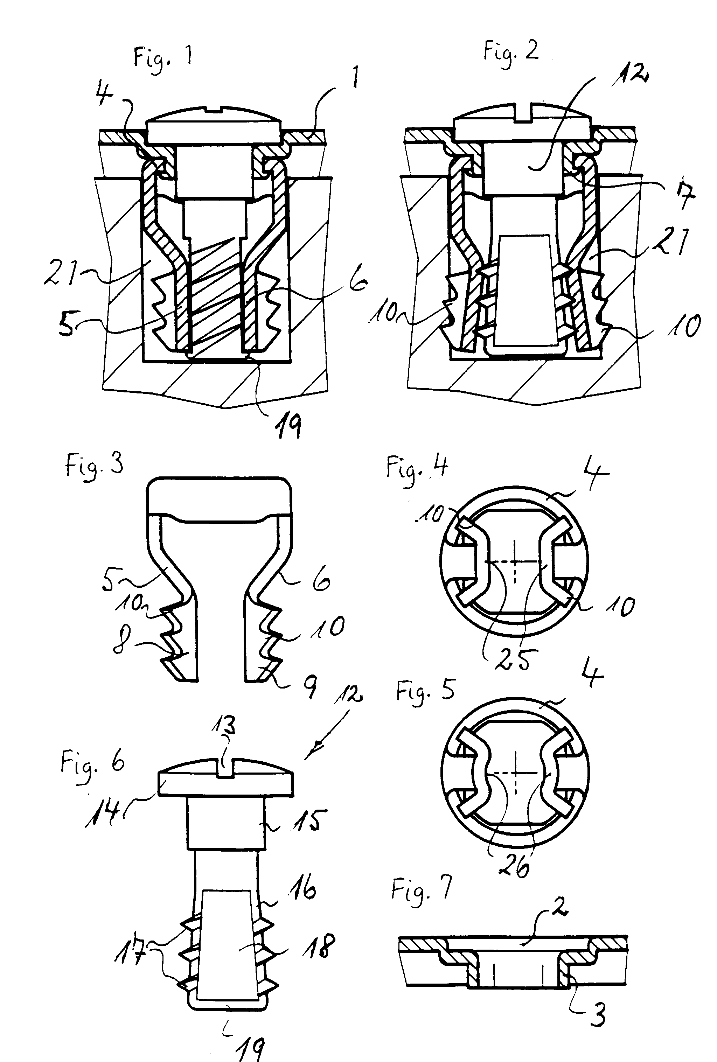

Bei dem Ausführungsbeispiel des Befestigungselements nach den Fig. 1 bis 7 ist das zu befestigende Teil 1, beispielsweise ein Beschlagteil oder der Befestigungsflansch eines Scharniertopfes, in dem Grund einer Einziehung 2 mit einem gebördelten Loch 3 (Fig. 7) versehen. Auf die Bördelung des Loches 3 ist ein Haltering 4 aufgeschoben, der einstückig mit zwei einander gegenüberliegenden Blechstreifen 5, 6 verbunden ist. Die Bördelung der Bohrung 3 ist nach dem Aufschieben des Halterings 4 in der aus den Fig. 1 und 2 ersichtlichen Weise durch Verstemmen oder Vernieten nach außen hin verbreitert, so daß der Haltering 4 zwischen dieser Verbreiterung 7 und der Unterseite der Einziehung 2 festgelegt ist. Die mit dem Haltering verbundenen Blechstreifen 5, 6 bestehen aus unteren Abschnitten 8, 9, deren seitlichen Ränder mit Zähnen 10 versehen sind. Die seitlichen Ränder sind nach außen gebogen, so daß sich in etwa radialer Richtung zu dem Haltering 4 verlaufende verzahnte Randleisten ergeben. Die unteren verzahnten Abschnitte sind in der aus den Fig. 1 bis 3 ersichtlichen Weise durch abgekröpfte Abschnitte mit dem Haltering 4 verbunden.

Der Haltering mit den Blechstreifen wird aus einem flachliegenden Blechstreifen durch Stanzen und Biegen gebildet.

In die gebördelte Befestigungsbohrung 3 ist der Spreizstift 12 eingesetzt. Der Spreizstift besitzt einen mit einem Schlitz oder Kreuzschlitz 13 versehenen Kopf 14, an den sich ein zylindrischer Schaftteil 15 anschließt. Über eine Stufe ist an den Schaftteil 15 ein Schaftteil 16 angeschlossen, der sich in der aus Fig. 6 ersichtlichen Weise zu seinem Ende hin mit flachem Keilwinkel keilförmig verbreitert. Der Schaftteil 16 ist mit selbstschneidenden Gewindegängen 17 versehen. Auf gegenüberliegenden Seiten ist der Schaftteil 16 mit Abflachungen 18 versehen, die parallel zueinander und zu der Mittelachse des Stifts 12 verlaufen, so daß der Stift 12 auf den gegenüberliegenden Seiten, auf denen die Gewindegängen 17 durch die Abflachungen 18 weggeschnitten sind, eine gleiche Breite aufweist. Die Abflachungen 18 sind in der Weise angebracht, daß diese in der aus Fig. 6 ersichtlichen Weise die Gewindegänge wegschneiden und ein unterer über die Abflachungen 18 überstehender Rand 19 erhalten bleibt.

Wird der Spreizstift 12 in der aus Fig. 1 ersichtlichen Weise in seine Montagestellung durch die Befestigungsbohrung 3 hindurchgedrückt, liegt er mit der Unterseite seines Kopfes 14 auf dem Grund der Einziehung 2. Die zueinander parallelen flachen Seiten 18 des unteren Schaftteils 16 liegen an den Innenseiten der unteren verzahnten Abschnitte der Blechstreifen 5, 6 an. Der untere Rand 19 greift über die unteren Stirnkanten der Blechstreifen 5, 6, so daß der Spreizstift in seiner aus Fig. 1 ersichtlichen Montagestellung fixiert ist, in der sich die Blechstreifen 5, 6 in der aus Fig. 1 ersichtlichen Weise in ein vorgebohrtes Loch 21 einsetzen lassen. Die Breite des Halterings 4 und der oberen Abschnitte der von diesem abgebogenen Blechstreifen 5, 6 ist derart auf den Durchmesser des Lochs 21 abgestimmt, daß diese etwa an dessen Wandung anliegen. Durch die Abkröpfungen der Blechstreifen 5, 6 sind die verzahnten unteren Bereiche 8, 9 soweit nach innen verlagert worden, daß die Zähne der Zahnleisten dicht vor der Wandung des Loches 21 liegen.

Durch eine Vierteldrehung des Spreizstifts 12 werden die unteren Bereiche der Blechstreifen in der aus Fig. 2 ersichtlichen Weise auseinandergespreizt, so daß die Zähne 10 der Zahnleisten in die Wandung der Bohrung 21 einschneiden. Gleichzeitig schneiden sich auch die selbstschneidenden Gewindegänge 17 in der aus Fig. 2 ersichtlichen Weise in die Blechstreifen ein, so daß der Spreizstift 12 zur Befestigung des Beschlagteils 1 sicher zwischen den Blechstreifen 5, 6 gehalten ist.

Die Mittelteile 25 der unteren mit der Zahnleisten versehenen Abschnitte der Blechstreifen 5, 6 können eben ausgebildet sein, wie es aus Fig. 4 ersichtlich ist. Diese mittleren Bereiche können aber auch zylinderschalenförmig gekrümmten Abschnitten 26 bestehen, wie es in Fig. 5 gezeigt ist.

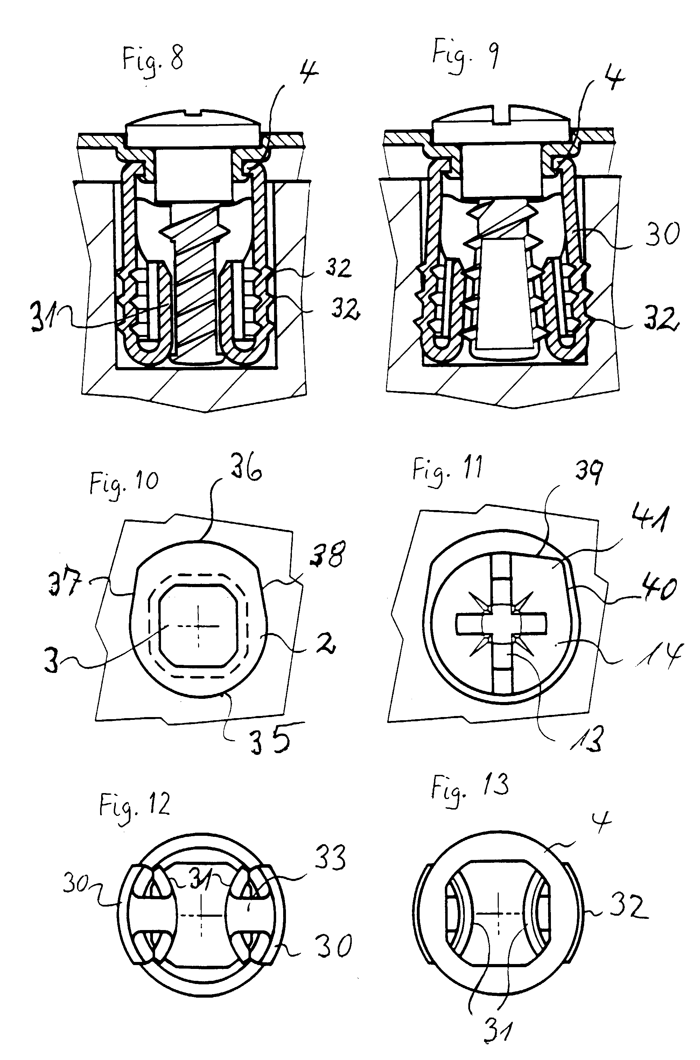

Bei dem aus den Fig. 8 bis 13 ersichtlichen Ausführungsbeispiel sind mit dem Haltering 4 gegenüberliegende Blechstreifen verbunden, die aus oberen zylinderschalenförmig gekrümmten Abschnitten 30 bestehen, die mit unteren Abschnitten 31 verbunden sind, die etwa parallel zu den oberen Abschnitten 30 umgebogen sind. Die oberen konvex nach außen zylinderschalenförmig gekrümmten Abschnitte 30 sind in ihren unteren Bereichen mit eingeprägten zahnartigen Wülsten 32 versehen. Die umgebogenen Abschnitte 31 sind ebenfalls konvex nach innen in der aus Fig. 12 ersichtlichen Weise zylinderschalenförmig gekrümmt und durch gebogene Stegteile 33 mit den oberen Abschnitten 30 verbunden. Um eine einfache Biegung zu ermöglichen, weisen die Stegteile 33 eine geringere Breite als die oberen und unteren Abschnitte 30, 31 der Blechstreifen auf.

Die Einziehung 2 besitzt zwei Umfangswandungsabschnitte 35, 36, die unterschiedliche Krümmungsradien aufweisen und zueinander konzentrisch sind. Die diese beiden konzentrischen Umfangswandungsabschnitte verbindenden geraden Wandungsabschnitte 37, 38 bilden Anschläge für die Flanken 39, 40, die durch eine radiale Ausbuchtung 41 des im übrigen kreisrunden Kopfes des Spreizstifts 12 gebildet sind. Die durch die Umfangswandungsabschnitte 37, 38 der Einziehung 2 und durch die Flanken 39, 40 des Fortsatzes 41 des Spreizstiftes 12 gebildeten zusammenwirkenden Anschläge sind so gewählt, daß sich der Spreizstift zwischen seiner aus Fig. 8 ersichtlichen Montagestellung und seiner Fig. 9 ersichtlichen Spreizstellung um etwa 90° drehen läßt.

Das gebördelte Loch 3 des zu befestigenden Teils 1 ist zweckmäßigerweise in der aus Fig. 10 ersichtlichen Weise im wesentlichen viereckig, so daß der mit einem entsprechenden inneren Querschnitt versehene Haltering 4 drehfest auf dem gebördelten Rand des Loches 3 festgelegt werden kann.

## Patentansprüche

1. Befestigungselement mit einem mit einer Befestigungsbohrung (3) versehenen Teil (1), vorzugsweise für ein Möbelscharnierteil, mit einem in ein vorgebohrtes Loch (21) einsetzbaren Spreizteil, das aus einander gegenüberliegenden Blechstreifen (5, 6) mit an deren äußeren Seiten angeordneten Zähnen (10) besteht und in dem ein mit einem Kopf (14) versehener Stift (12), der auf gegenüberliegenden schmaleren Seiten seines Schaftes (16) mit in Umfangsrichtung verlaufenden, schneidenden Stegen (17) versehen ist, durch etwa eine Vierteldrehung verriegelbar ist,
**dadurch gekennzeichnet,**
daß die Blechstreifen (5, 6) an ihren oberen Enden mit dem zu befestigenden Teil (1) verbunden sind.

2. Befestigungselement nach Anspruch 1, dadurch gekennzeichnet, daß die Blechstreifen (5, 6; 31, 32, 33) durch einen Haltering (4) mit dem unteren Randbereich der Befestigungsbohrung (3) verbunden sind.

3. Befestigungselement nach Anspruch 1 oder 2, dadurch gekennzeichnet, daß die Befestigungsbohrung aus einem gebördelten Loch (3) des zu befestigenden Teils (1) besteht und der Haltering (4) zwischen dem Randbereich der Unterseite des Loches und dem verstemmten oder vernieteten unteren Rand der Bördelung (3) festgelegt ist.

4. Befestigungselement nach einem der Ansprüche 1 bis 3, dadurch gekennzeichnet, daß die mit Zähnen (10) versehenen Seiten der Blechstreifen (8, 9) nach außen abgewinkelt sind.

5. Befestigungselement nach einem der Ansprüche 1 bis 4, dadurch gekennzeichnet, daß die unteren mit Zähnen (10) versehenen Bereiche (8, 9) der Blechstreifen (5, 6) über gekröpfte Abschnitte der Blechstreifen mit dem Haltering (4) verbunden sind.

6. Befestigungselement nach einem der Ansprüche 1 bis 5, dadurch gekennzeichnet, daß die Blechstreifen (5, 6) im Bereich der Zähne (10) zylinderschalenförmig (26) konvex nach außen gekrümmt sind.

7. Befestigungselement nach Anspruch 1, dadurch gekennzeichnet, daß die unteren Endbereiche (31) der Blechstreifen aufeinander zu nach innen hin umgelegt sind.

8. Befestigungselement nach Anspruch 7, dadurch gekennzeichnet, daß die äußeren Teile (30) der Blechstreifen im Bereich der umgelegten Abschnitte (31) mit in Umfangsrichtung verlaufenden Wülsten (32) versehen sind.

9. Befestigungselement nach Anspruch 7 oder 8, dadurch gekennzeichnet, daß die parallel zu den äußeren Teilen (30) umgelegten inneren Abschnitte (31) der Blechstreifen konvex nach innen hin gekrümmt sind.

10. Befestigungselement nach einem der Ansprüche 1 bis 9, dadurch gekennzeichnet, daß sich die schmalen Seiten des Spreizstifts (12) zu dessen Ende hin keilförmig verbreitern.

11. Befestigungselement nach einem der Ansprüche 1 bis 10, dadurch gekennzeichnet, daß der Spreizstift (12) mit einem unteren die breiten Seiten (18) überragenden Rand (19) versehen ist.

12. Befestigungselement nach einem der Ansprüche 1 bis 11, dadurch gekennzeichnet, daß der Spreizstift (12) an seinen schmalen Seiten mit gewindeartigen schneidenden Stegen (17) versehen ist.

13. Befestigungselement nach einem der Ansprüche 1 bis 12, dadurch gekennzeichnet, daß der kreisrunde Umfang des Kopfes (14) des Spreizstifts (12) mit einem radialen Fortsatz (41) versehen ist, dessen Seiten (39, 40) Anschläge für Abschnitte (37, 38) der Seitenwandung einer Einziehung (2) des zu befestigenden Teils (1) bilden, in die der Kopf (14) zumindest teilweise versenkbar ist, und daß die Anschläge und die durch die Abschnitte der Seitenwand gebildeten Gegenanschläge eine Drehung des Spreizstifts (12) um etwa 90° zulassen.

## Claims

1. Fastening element with a component (1) provided with a fixing hole (3), preferably for a furniture hinge element, with an expansion-type fixing component for insertion in a pre-drilled hole (21), said fixing component comprising metal strips (5, 6) facing each other with teeth (10) provided on their outer faces, in which is located a stud (12) provided with a head (14) and with cutting protrusions (17) arranged on opposing, narrow faces of its shank (16) and running in the circumferential direction, which stud (12) may be locked by an approx. quarter turn,
**characterised in that**
the metal strips (5, 6) are connected at their top ends to the component (1) to be fastened.

2. Fastening element according to Claim 1, characterised in that the metal strips (5, 6; 31, 32, 33) are connected by a retaining ring (4) to the lower rim section of the fixing hole (3).

3. Fastening element according to Claim 1 or 2, characterised in that the fixing hole comprises an edged hole (3) in the component (1) to be fastened, and the retaining ring (4) is secured between the rim section of the bottom of the hole and the caulked or riveted lower rim of the edging (3).

4. Fastening element according to one of Claims 1 to 3, characterised in that the faces of the metal strips (8, 9) provided with teeth (10) are angled outwards.

5. Fastening element according to one of Claims 1 to 4, characterised in that the lower sections (8, 9) of the metal strips (5, 6) provided with teeth (10) are connected to the retaining ring (4) by crimped sections of said metal strips.

6. Fastening element according to one of Claims 1 to 5, characterised in that in the area of the teeth (10) the metal strips (5, 6) are bent outwards in the convex shape of a cylinder shell (26).

7. Fastening element according to Claim 1, characterised in that the lower end sections (31) of the metal strips are folded over inwards towards each other.

8. Fastening element according to Claim 7, characterised in that the outer sections (30) of the metal strips are provided in the area of the folded over sections (31) with beads (32) running in the circumferential direction.

9. Fastening element according to Claim 7 or 8, characterised in that the inner sections (31) of the metal strips folded over so that they are parallel with the outer sections (30) are bent inwards so that they are convex.

10. Fastening element according to one of Claims 1 to 9, characterised in that the narrow faces of the expansion stud (12) increase in width wedge-like towards its end.

11. Fastening element according to one of Claims 1 to 10, characterised in that the expansion stud (12) is provided with a bottom rim (19) protruding over the wide faces (18).

12. Fastening element according to one of Claims 1 to 11, characterised in that the expansion stud (12) is provided at its narrow faces with thread-like cutting protrusions (17).

13. Fastening element according to one of Claims 1 to 12, characterised in that the circular periphery of the head (14) of the expansion stud (12) is provided with a radial protrusion (41), of which the sides (39, 40) form stop faces for sections (37, 38) of the side wall of a recess (2) in the component (1) to be fastened, in which recess (2) the head (14) can be at least partially countersunk, and that the stop faces and the mating faces formed by the said sections (37, 38) of the side wall permit a rotation of the expansion stud (12) around approx. 90°.

## Revendications

1. Elément de fixation comportant une partie (1) pourvue d'un perçage de fixation (3), de préférence pour une pièce de charnière de meuble, comportant une pièce d'écartement pouvant être insérée dans un trou préperforé (21) qui consiste en bandes en tôle (5, 6) se faisant face, présentant des dents (10) disposées à leur côté extérieur et dans lequel une pointe (12) pourvue d'une tête (14) qui présente sur des côtés opposés plus étroits de sa tige (16) des barrettes (17) tranchantes s'étendant en direction de la circonférence, ladite pointe pouvant être verrouillée par approximativement un quart de tour,
**caractérisé en ce que**
les bandes en tôle (5, 6) sont raccordées à leurs extrémités supérieures avec la pièce à fixer (1).

2. Elément de fixation selon la revendication 1, caractérisé en ce que les bandes en tôle (5, 6; 31, 32, 33) sont raccordées par un anneau de blocage (4) avec la zone du bord inférieure du perçage de fixation (3).

3. Elément de fixation selon les revendications 1 ou 2, caractérisé en ce que le perçage de fixation consiste en un trou (3) serti de la pièce à fixer (1) et que l'anneau de blocage (4) est déterminé dans sa position entre la zone du bord du fond du trou et le bord inférieur maté ou riveté du sertissage.

4. Elément de fixation selon l'une quelconque des revendications 1 à 3, caractérisé en ce que les côtés des bandes en tôle (8, 9) pourvues de dents (10) sont courbées vers l'extérieur.

5. Elément de fixation selon l'une quelconque des revendications 1 à 4, caractérisé en ce que les zones inférieures (8, 9) des bandes en tôle (5, 6) pourvues de dents (10) sont raccordées à l'anneau de blocage (4) par l'intermédiaire de sections coudées des bandes en tôle.

6. Elément de fixation selon l'une quelconque des revendications 1 à 4, caractérisé en ce que les bandes en tôle (5, 6), dans la zone des dents (10), sont courbées de manière convexe dans la forme d'une enveloppe de cylindre (26).

7. Elément de fixation selon la revendication 1, caractérisé en ce que les zones d'extrémité inférieures (31) des bandes en tôle sont repliées vers l'intérieur l'une vers l'autre.

8. Elément de fixation selon la revendication 7, caractérisé en ce que les parties extérieures (30) des bandes en tôle sont pourvues dans la zone des sections repliées (31) de bourrelets (32) s'étendant en direction de la circonférence.

9. Eléments de fixation selon les revendications 7 ou 8, caractérisé en ce que les sections intérieures (31) des bandes en tôle repliées en parallèle aux parties extérieures (30) sont courbées de manière convexe vers l'intérieur.

10. Elément de fixation selon l'une quelconque des revendications 1 à 9, caractérisé en ce que les côtés étroits de la pointe d'écartement (12) s'élargissent à la manière d'un cône vers l'extrémité de celle-ci.

11. Elément de fixation selon l'une quelconque des revendications 1 à 10, caractérisé en ce que la pointe d'écartement (12) est pourvue d'un bord (19) dépassant vers le bas les côtés larges (18).

12. Elément de fixation selon l'une quelconque des revendications 1 à 11, caractérisé en ce que la pointe d'écartement (12) est pourvue à ses côtés étroits de barrettes (17) tranchantes à la manière d'un filet.

13. Elément de fixation selon l'une quelconque des revendications 1 à 12, caractérisé en ce que la circonférence circulaire de la tête (14) de la pointe d'écartement (12) est pourvue d'une projection radiale (41) dont les côtés (39, 40) forment des butées pour des sections (37, 38) de la paroi latérale d'un creux (2) de la pièce à fixer (1), dans lequel la tête (14) peut être enfoncée du moins partiellement et que les butées et les contre-butées formées par les sections de la paroi latérale permettent un pivotement d'environ 90° de la pointe d'écartement.
